**Europäisches Patentamt**

**European Patent Office**

**Office européen des brevets**

(11) Veröffentlichungsnummer: **0 255 599
B1**

(12) **EUROPÄISCHE PATENTSCHRIFT**

(45) Veröffentlichungstag der Patentschrift:
**30.08.89**

(21) Anmeldenummer: **87109102.1**

(22) Anmeldetag: **24.06.87**

(51) Int. Cl.⁴: **B65G 47/24, B65B 35/56**

(54) Sortier- und Ausrichtvorrichtung für Hohlkörper.

(30) Priorität: **07.08.86 DE 3626733**

(43) Veröffentlichungstag der Anmeldung:
**10.02.88 Patentblatt 88/6**

(45) Bekanntmachung des Hinweises auf die Patenterteilung:
**30.08.89 Patentblatt 89/35**

(84) Benannte Vertragsstaaten:
**AT BE CH DE ES FR GB GR IT LI LU NL SE**

(56) Entgegenhaltungen:
**EP-A- 0 018 611
DE-B- 1 912 687
DE-B- 1 938 474**

(73) Patentinhaber: **ROBERT BOSCH GMBH, Postfach 50,
D-7000 Stuttgart 1(DE)**

(72) Erfinder: **Haarer, Rolf, Dipl.-Ing., Sophienweg 6,
D-7065 Winterbach(DE)**
Erfinder: **Moser, Theo, Schubertstrasse 7,
D-7062 Steinenberg(DE)**
Erfinder: **Reum, Klaus, Dipl.-Ing., Höiderlinstrasse 8,
D-7054 Korb(DE)**

## Beschreibung

Die Erfindung bezieht sich auf eine Sortier- und Ausrichtvorrichtung für Hohlkörper nach dem Oberbegriff des Anspruchs 1. Solche Hohlkörper haben die Form von länglichen Behältern, Röhrchen oder Hülsen, deren eines Ende offen und deren anderes Ende wenigstens teilweise verschlossen ist.

Aufgabe der Erfindung ist es, eine Vorrichtung zu schaffen, die die ungeordnet aufgegebenen Hohlkörper vereinzelt und zum Befüllen in einer Lage bereitstellt, in der die Hohlkörper die gleiche Ausrichtung haben und ihr offenes Ende in die gleiche Richtung weist, so daß diese in einer nachfolgenden Vorrichtung ohne Schwierigkeit befüllt werden können.

Die Lösung dieser Aufgabe wird durch die im Kennzeichen des Anspruchs 1 aufgeführten Maßnahmen erreicht.

Die erfindungsgemäße Vorrichtung hat den Vorteil einer räumlich gedrungenen Bauweise. Ferner hat sie eine sehr hohe Leistung und Verläßlichkeit.

Durch die in den Unteransprüchen aufgeführten Maßnahmen sind vorteilhafte Weiterbildungen und Verbesserungen der im Anspruch 1 angegebenen Vorrichtung möglich.

Ein Ausführungsbeispiel der Erfindung ist in der Zeichnung dargestellt und in der nachfolgenden Beschreibung näher erläutert. Es zeigen

Figur 1 eine Sortier- und Ausrichtvorrichtung in perspektivischer Darstellung,

Figur 2 und 3 im Querschnitt eine Sortierwalze und ein Sortierrad mit einem Hohlkörper in der Sortierwalze, dessen verschlossenes Ende radial außen von der Drehachse der Sortierwalze angeordnet ist,

Figur 2a zu Stiften des Sortierrades ausgerichtete Stößel in perspektivischer Ansicht,

Figur 4 und 5 im Querschnitt die Sortierwalze und das Sortierrad mit einem Hohlkörper in der Sortierwalze, dessen offenes Ende radial außen von der Drehachse der Sortierwalze angeordnet ist und

Figur 4a einen Stößel, der einen Hohlkörper auf einen Stift des Sortierrades schiebt, in perspektivischer Ansicht.

Mit der dargestellten und im Nachfolgenden näher beschriebenen Vorrichtung werden Hohlkörper, wie an einem Ende offene und am anderen Ende verschlossene Hülsen 10, aufgerichtet. Die Hülsen 10 sind in einem nicht dargestellten Trichter in ungeordneter Lage als Vorrat aufgegeben und werden von dort durch eine Führungsbahn 13 mit mehreren parallelen Führungsspuren 13A an die Oberseite einer Sortierwalze 14 herangeführt. In der als Hohlwalze ausgebildeten Sortierwalze 14 befinden sich eine der Anzahl der Bahnspuren 13A entsprechende Anzahl von radial verlaufenden, durchgehenden Bohrungen 17 in mehreren, gleichmäßig auf dem Umfang verteilten Reihen 18, 19 usw. Nahe dem inneren Ende jeder Bohrung 17 sind diese verengt, so daß eine einen Anschlag bildende Schulter 21 ausgebildet ist, die verhindert, daß der Sortierwalze 14 zulaufende Hülsen 10 durch die Bohrungen 17 fallen.

Die Tiefe der Bohrungen 17 ist derart, daß die Hülsen 10 nahezu vollständig von den Bohrungen 17 aufgenommen werden, wobei ihre äußeren Enden im wesentlichen mit der Umfangsfläche der Sortierfläche 14 übereinstimmen oder nur unwesentlich herausragen.

Parallel neben der Sortierwalze 14 ist ein Sortierrad 24 um eine horizontale, zur Drehachse der Sortierwalze 14 parallele Achse drehbar angeordnet. Das Sortierrad 24 hat mehrere radial nach außen abstehende Stifte 25, die in mehreren Reihen angeordnet sind, wobei die Anzahl dieser Reihen der Anzahl der Bohrungsreihen 18, 19 der Sortierwalze 14 und die Anzahl der Stifte 25 pro Reihe der Anzahl der Bohrungen 17 einer Reihe 18, 19 der Sortierwalze 14 entsprechen. Die Umfangsfläche mit den Enden der Stifte 25 hat vom Außenumfang der Sortierwalze einen bestimmten Abstand.

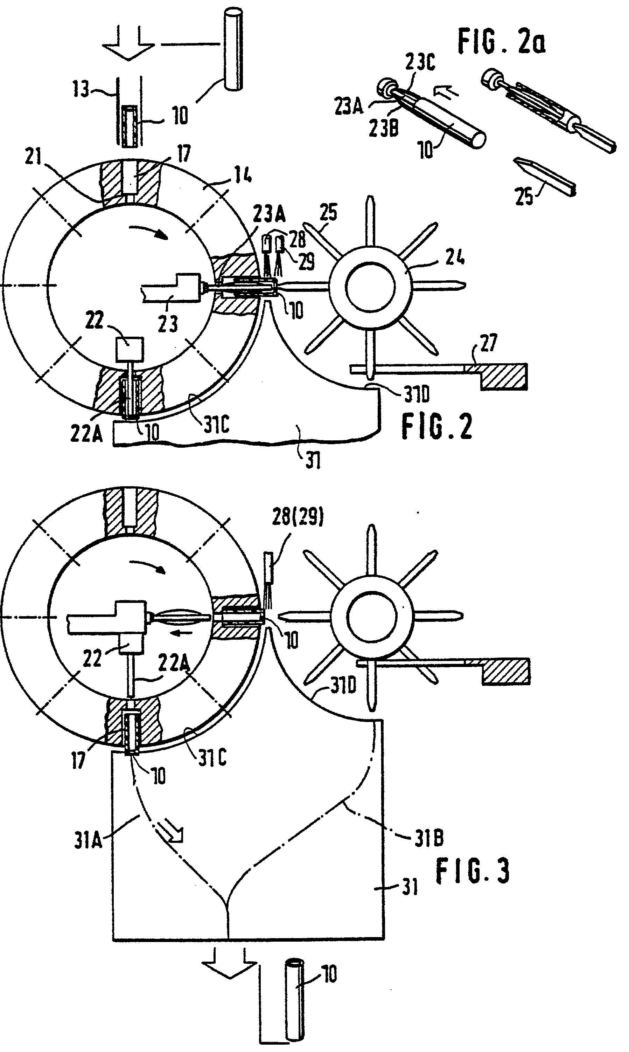

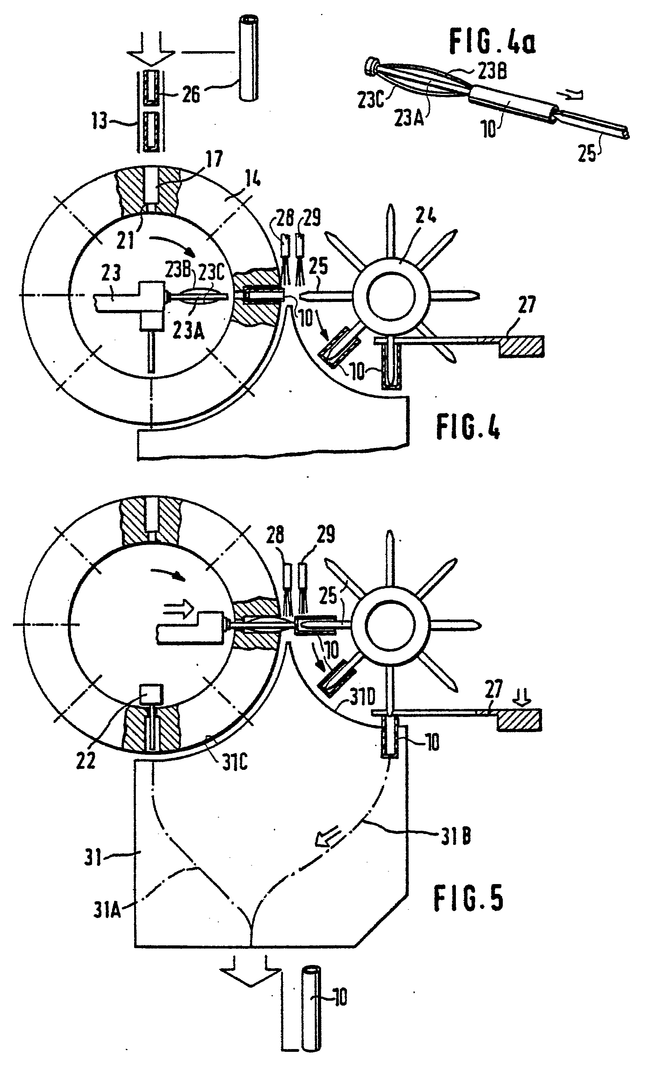

Im Hohlraum der Sortierwalze 14 sind zwei Schieber 22 und 23 angeordnet. Der eine Schieber 22 ist vertikal auf- und abbewegbar und der andere Schieber 23 horizontal hin- und herbewegbar. Der Schieber 23 trägt eine Reihe Stößel 23A, deren Anzahl der Anzahl einer Bohrungsreihe entspricht. Die Stößel 23A sind in horizontaler Ebene radial gegen den Mantel der Sortierwalze 24 ausgerichtet. Am Schieber 22 ist ebenfalls eine Reihe Stößel 22A befestigt, deren Anzahl ebenfalls der Anzahl von Bohrungen 17 einer Reihe entspricht. Die Stößel 22A erstrecken sich senkrecht nach unten und sind in einem rechten Winkel zu den Stößeln 23A angeordnet. Auf den Stößeln 23A des Schiebers 23 sind bogenförmige Federelemente 23B und 23C befestigt (Figuren 2a und 4a).

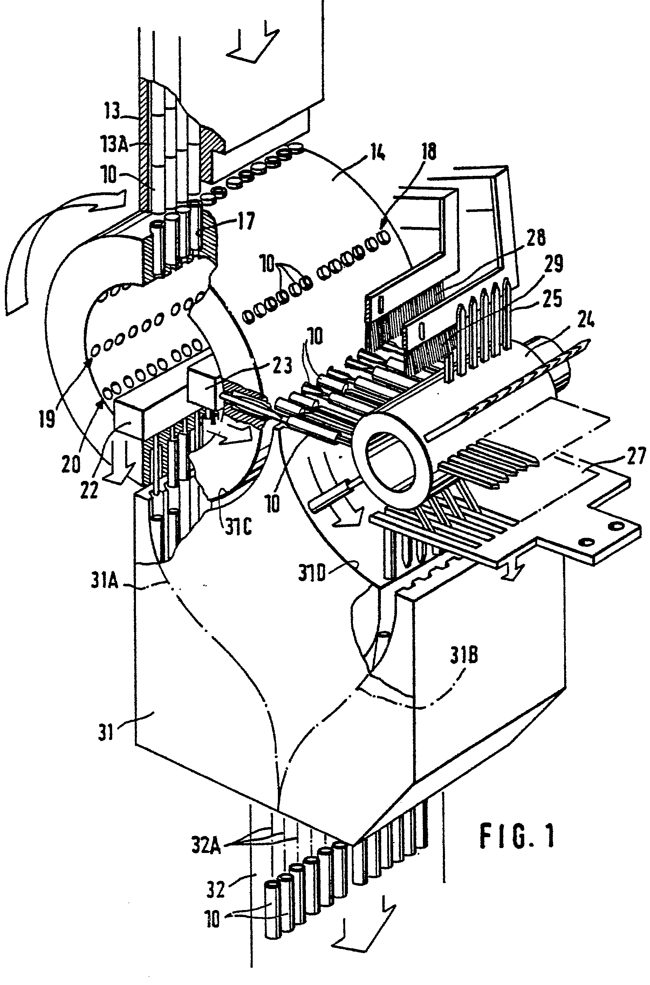

Unterhalb der Sortierwalze 14 und des Sortierrades 24 befindet sich ein Übernahmeblock 31 (Figuren 1, 3 und 5), der zwei Führungsbahnen 31A und 31B enthält. Der Einlauf der einen Führungsbahn 31A liegt unterhalb der Sortierwalze 14 und der Einlauf der anderen Führungsbahn 31B liegt unterhalb des Sortierrades 24. Die beiden Führungsbahnen 31A und 31B laufen aufeinander zu und gehen in eine nach unten sich erstreckende Führungsbahn 32 über (Figur 3 und 5).

Das Oberteil des Übernahmeblocks 31 hat zwei nach unten gerichtete, zur Sortierwalze 14 und zu dem Sortierrad 24 gleichachsig gekrümmte Flächen 31C, 31D, die verhindern, daß Hülsen 10 aus den Bohrungen 17 oder von den Stiftan 25 während ihrer Förderung aus der horizontalen Lage in die vertikale Lage rutschen.

Die Hülsen 10 werden der Sortierwalze 14 durch die Führungsspuren 13A der Führungsbahn 13 (Figur 1) zugeleitet, wobei sie hier wohl axial zueinander ausgerichtet sind, jedoch die Lage ihrer Öffnung wahllos unterschiedlich ist. Die Aufgabe der Sortier- und Ausrichtvorrichtung mit der Sortierwalze 14 und dem Sortierrad 24 besteht darin, alle Hülsen 10 so auszurichten, daß sie in der Führungsbahn 32 dieselbe Lage einnehmen, wobei ihre Öffnungen oben liegen.

Die Sortierwalze 14 und das Sortierrad 24 werden jeweils um einen bestimmten Drehwinkel gedreht. Wenn eine Reihe Bohrungen 17 der Sortierwalze nach oben gelangt, fallen Hülsen 10 aus den Führungsspuren 13A in die Bohrungen 17. Eine Drehung der Sortierwalze 14 aus der Stellung, wo die Bohrungen 17 einer Reihe senkrecht ausgerichtet sind in eine Lage, wo diese Bohrungen 17 eine horizontale Lage einnehmen, bringt diese Bohrungen 17 in Ausrichtung mit einer Reihe Stifte 25 des Sortierrades 24 und mit den Stößeln 23A innerhalb der Sortierwalze 14.

Unter Bezugnahme auf die Figuren 2 und 3 wird angenommen, daß eine Hülse 10 in einer der Bohrungen 17 so angeordnet ist, daß ihr offenes Ende radial nach innen weist. In der Drehstellung der Sortierwalze 14, in der die Bohrung 17 mit der Hülse 10 dem Sortierrad 24 gegenüberliegt, dringt bei einem horizontalen Hub des Schiebers 23 der Stößel 23A mit den Federn 23B, 23C in das offene Ende der Hülse 10 ein und verschiebt diese nur so weit, bis ihr geschlossenes Ende an der Spitze des gegenüberliegenden Stiftes 25 zur Anlage kommt. Beim anschließenden Rückhub des Schiebers 23 ziehen die Federn 23B, 23C unter Reibschluß die Hülse 10 in die Bohrung 17 bis zum Anschlag an der Schulter 21 zurück, so daß das geschlossene Ende der Hülse 10 im wesentlichen mit dem radial äußeren Ende der Bohrung 17 fluchtet. Wenn durch einen folgenden Drehschritt die Sortierwalze 14 in eine Position gelangt ist, in der die Bohrung 17 senkrecht nach unten steht, bewegt sich der andere Schieber 22 senkrecht nach unten, und sein Stößel 22A schiebt die Hülse 10 in die Führungsbahn 31A des Übernahmeblocks 31. Von hier aus gleitet die Hülse 10 in eine von mehreren parallelen Führungsspuren 32A der Führungsbahn 32 (Figur 3).

Ist andererseits, wie die Figuren 4 und 5 zeigen, eine Hülse 10 in eine Bohrung 17 der Sortierwalze 14 gelangt, so daß ihr offenes Ende radial nach außen weist, so steht nach einem Schaltschritt der Sortierwalze 14 zum Sortierrad 24 hin das offene Ende der Hülse 10 einem Stift 25 des Sortierrades 24 gegenüber. Bei einem anschließenden Hub des Schiebers 23 und seiner Stößel 23A, trifft ein Stößel 23A auf das geschlossene Ende der Hülse 10 und verschiebt diese auf den ausgerichteten Stift 25. Beim Zurückziehen des Schiebers 23 verbleibt die Hülse 10 auf dem Stift 25. Das Sortierrad 24 transportiert bei einem anschließenden Drehschritt diese Hülse 10 in eine senkrechte, untere Position. In dieser senkrechten Lage der Hülse 10 wird ein rechenförmiger Abstreifer 27 betätigt, der am oberen Rand der Hülse 10 angreift und diese nach unten in eine Führungsspur 31B des Übernahmeblocks 31 schiebt. Diese Hülse 10 gelangt ebenfalls zu der Führungsbahn 32 in einer Lage, in der sich ihr offenes Ende oben befindet, so daß nun alle Hülsen 10 mit ihrem offenen Ende oben aufgerichtet sind.

An der Stelle, wo die Bohrungen 17 der Sortierwalze 14 mit den Stiften 25 des Sortierrades 24 ausgerichtet sind, sind Rückhaltebürsten 28, 29 angeordnet, die die Hülsen 10 zurückhalten, bis diese beim Drehen der Sortierwalze 14 und des Sortierrades 24 in den Bereich der Rückhalteflächen 31C, 31D des Übernahmeblocks 31 gelangen.

Während des Betriebs der Vorrichtung spielt es keine Rolle, ob das offene oder das geschlossene Ende einer Hülse, eines Behälters oder dergleichen voraus in eine Bohrung 17 der Sortierwalze 14 gelangt. Wenn das offene Ende radial außen ist, hält der Schieber 23 die Hülse 10 in der Bohrung 17 zurück, und wenn die Sortierwalze 14 die Hülse 10 in eine senkrechte Lage verbracht hat, schiebt der Schieber 22 die Hülse aus der Bohrung 17 in eine der Führungsspuren der Führungsbahn 31A, wobei die Hülse 10 ihr offenes Ende oben hat. Wenn eine Hülse 10 in eine Bohrung 17 gelangt, wobei ihr offenes Ende radial nach außen gerichtet ist, überführt der Schieber 23 dia Hülse 10 aus der Bohrung 17 auf einen dieser gegenüberliegenden Stift 25. Die Hülse 10 wird auf dem Stift 25 zurückgehalten, wenn der Schieber 23 sich zurückzieht und wenn das Sortierrad 24 um 90° sich dreht, um die Hülse 10 in eine vertikale Lage zu verbringen. In dieser Lage schiebt der Abstreifer 27 die Hülse 10 von dem Stift in die Führungsbahn 31B, wobei ihr offenes Ende oben ist. Auf diese Weise werden die Hülsen 10 aufgestellt und so ausgerichtet, daß ihr offenes Ende nach oben weist, ohne Rücksicht darauf, ob bei ihrer Übergabe an die Sortierwalze ihr Ende oben oder unten sich befindet.

Anstelle eines Sortierrades 24 mit Stiften 25 kann auch eine zweite Sortierwalze verwendet werden. Die zweite Sortierwalze ist ähnlich gestaltet wie die erste Sortierwalze 14. Die zweite Sortierwalze enthält ebenfalls auf dem Umfang verteilte, axial ausgerichtete Reihen von sich radial erstreckenden Durchbrüchen oder Bohrungen, deren Anzahl der der Bohrungen in der ersten Sortierwalze entspricht. Am radial inneren Ende jeder Bohrung befindet sich eine Ringschulter, die einen Anschlag für die Hülsen bildet, so daß diese in den Bohrungen getragen werden. Die Schulter kann vorzugsweise teilweise offen sein, damit ein im Innern der als Hohlwalze ausgebildeten Sortierwalze angeordneter Stößel radial nach außen eindringen kann, um die in einer Bohrung befindliche Hülse auszustoßen. Hülsen, die in den Bohrungen der ersten Sortierwalze so angeordnet sind, daß ihre offenen Enden gegen die Bohrungen der zweiten Sortierwalze weisen, werden in diese Bohrungen der zweiten Sortierwalze überschoben und verbleiben darin. Die Bohrungen der zweiten Sortierwalze können Federn oder andere Mittel enthalten, die das Festhalten der Hülsen sichern. Die in die zweite Sortierwalze überführten Hülsen nehmen eine Lage ein, in der ihr offenes Ende nach innen gerichtet ist. In den Bohrungen der ersten Sortierwalze 14 aufgenomme Hülsen 10, deren offenes Ende zur Achse dieser Sortierwalze hinweisen, werden nicht in die zweite Sortierwalze überführt, sondern verbleiben in den Bohrungen der ersten Sortierwalze. Auf diese Weise werden von beiden Sortierwalzen die Hülsen mit ihrem verschlossenen Ende voraus abgegeben.

**Patentansprüche**

1. Vorrichtung zum Sortieren und Ausrichten ungeordnet aufgegebener Hohlkörper, die ein wenigstens teilweise verschlossenes Ende und ein gegenüberliegendes offenes Ende haben, in eine gleichsinnige Lage, gekennzeichnet durch
- einen um eine erste Achse drehbaren ersten Rotot (14),
- einen um eine zweite, zur ersten Achse parallele Achse drehbaren zweiten Rotor (24),
- radiale Durchbrüche (17) im ersten Rotor (14) zur Aufnahme von Hohlkörpern (10) und Rückhaltemittel (25) am zweiten Rotor (24) zum Aufnehmen von Hohlkörpern (10),
- eine Einrichtung zum schrittweisen Drehen der beiden Rotoren (14, 24), um die Durchbrüche (17) mit den Rückhaltemitteln (25) in Ausrichtung miteinander zu bringen,
- eine dem ersten Rotor (14) zugeordnete Zuführungseinrichtung (13) zum Überführen von Hohlkörpern in dis Durchbrüche (17) des ersten Rotors in einer Stellung desselben, in der seine Durchbrüche in Ausrichtung mit der Zuführungseinrichtung (13) gebracht sind,
- einen Schieber (23) zum Überschieben von denjenigen Hohlkörpern (10), die in den Durchbrüchen (17) eine Lage einnehmen, in der ihr offenes Ende von der Drehachse des ersten Rotors (14) wegweist, zu den Rückhaltemitteln (25) des zweiten Rotors (24) und eine Einrichtung (23B, 23C) zum Zurückhalten derjenigen Hohlkörper (10) in den Durchbrüchen (17), deren offenes Ende gegen die Drehachse weist,
- eine den beiden Rotoren (14, 24) zugeordnete Übernahmeeinrichtung (31) zum Übernehmen der Hohlkörper (10) von den beiden Rotoren, nachdem diese die Hohlkörper (10) in gleiche Ausrichtung zu der Übernahmeeinrichtung gebracht haben, wobei die von den Rotoren gehaltenen Hohlkörper mit ihrem offenen Ende jeweils gegen die betreffende Achse der Rotoren weisen, und
- Einrichtungen (22, 27) zum Überschieben der Hohlkörper in eine Lage, in der sie alle gleichsinnig ausgerichtet sind.

2. Vorrichtung nach Anspruch 1, dadurch gekennzeichnet, daß der erste Rotor (14) mehrere auf dem Umfang verteilte Reihen radial ausgerichteter und axial beabstandeter Durchbrüche (17) hat.

3. Vorrichtung nach Anspruch 1, dadurch gekennzeichnet, daß der zweite Rotor (24) mehrere, auf seinem Umfang verteilte Reihen radial ausgerichteter und axial beabstandeter Rückhaltemittel (25) hat.

4. Vorrichtung nach Anspruch 3, dadurch gekennzeichnet, daß die Rückhaltemittel als radial vom Rotor (24) abstehende Stifte (25) ausgebildet sind.

5. Vorrichtung nach Anspruch 1, dadurch gekennzeichnet, daß der Schieber (23) Stößel (23A) aufweist und in einem zentralen Hohlraum des ersten Rotors (14) angeordnet ist, derart, daß er mit Durchbrüchen (17) des ersten Rotors ausgerichtet ist, wenn diese mit den Rückhaltemitteln (25) ausgerichtet sind.

6. Vorrichtung nach einem der Ansprüche 1 oder 5, dadurch gekennzeichnet, daß die Mittel zum Zurückhalten der Hohlkörper (10), deren offenes Ende gegen die Drehachse des ersten Rotors (14) gerichtet ist, als Federelemenete (23B, 32C) ausgebildet sind, die durch Reibschluß die Hohlkörper an deren Innenseite halten.

7. Vorrichtung nach einemder Ansprüche 1 oder 4, dadurch gekennzeichnet, daß den Rückhaltemitteln (25) des zweiten Rotors (24) eine Abstreifeinrichtung (27) zugeordnet ist, die von den Rückhaltemitteln gehaltenen Hohlkörper (10) von diesen entfernt.

8. Vorrichtung nach Anspruch 1, dadurch gekennzeichnet, daß in einem zentralen Hohlraum des ersten Rotors (14) eine Einrichtung (22) zum Auswerfen von in den Durchbrüchen (17) des ersten Rotors befindlichen Hohlkörpern (10) angeordnet ist, deren offenes Ende gegen die Drehachse des ersten Rotors (14) weist, und daß die Auswerfeinrichtung (22) Stößel (22A) aufweist, die mit Durchbrüchen des ersten Rotors ausgerichtet sind, wenn diese mit der Übernahmeeinrichtung (31) ausgerichtet sind.

9. Vorrichtung nach Anspruch 1, dadurch gekennzeichnet, daß die radialen Durchbrüchen (17) einen Anschlag (21) für die Eindringtiefe der Hohlkörper haben.

10. Vorrichtung nach Anspruch 9, dadurch gekennzeichnet, daß der Anschlag (21) den zugehörigen Durchbruch (17) wenigstens teilweise verschließt.

11. Vorrichtung nach Anspruch 1, dadurch gekennzeichnet, daß die Übernahmeeinrichtung (31) eine erste Führungsbahn (31A) zur Übernahme von Hohlkörper (10) aus dem ersten Rotor (14) und eine zweite Führungsbahn (31B) zur Übernahme von Hohlkörpern von dem zweiten Rotor (24) aufweist und daß beide Führungsbahnen (31A, 31B) in eine gemeinsame Führungsbahn (32) münden.

12. Vorrichtung nach Anspruch 1, dadurch gekennzeichnet, daß an der gemeinsamen Übergabestelle des ersten Rotors (14) und des zweiten Rotors (24) Rückhaltemittel (28, 29) angeordnet sind, welche Hohlkörper (10) in den Durchbrüchen (17) des ersten Rotors (14) oder Hohlkörper (10) auf den Stiften (25) des zweiten Rotors zurückhalten.

13. Vorrichtung nach Anspruch 12, dadurch gekennkzeichnet, daß die Rückhaltemittel als Rückhaltebürsten (28, 29) ausgebildet und so angeordnet sind, daß sie durch Reibschluß wirken.

**Claims**

1. Device for sorting and aligning hollow components fed at random which have an at least partially closed end and an opposite open end, into a parallel position, characterized by
- a first rotor (14) rotatable about a first axis,
- a second rotor (24) rotatable about a second axis parallel to the first axis,
- radial perforations (17) in the first rotor (14) to accommodate hollow components (10) and restraining means (25) on the second rotor (24) to receive hollow components (10), a device for stepped rotation of the two rotors (14, 24) to bring the perforations (17) into mutual alignment with the restraining means (25),
- a feeder device (13) associated with the first rotor (14) to transfer hollow components into the perforations (17) of the first rotor in a position of the latter in which its perforations are brought into alignment with the feeder device (13),

– a thruster (23) to transfer those hollow components (10) which assume a position in the perforations (17) in which their open end faces away from the axis of rotation of the first rotor (14), to the restraining means (25) of the second rotor (24) and a device (23B, 23C) to restrain those hollow components (10) in the perforations (17), the open end of which faces the axis of rotation,

– an acceptor device (31) associated with the two rotors (14, 24) to accept the hollow components (10) from the two rotors after the latter have brought the hollow components (10) into the same alignment to the acceptor device, the hollow components held by the rotors each having their open end facing the relevant axis of the rotor, and devices (22, 27) to transfer the hollow components into a position in which they are all aligned in the same sense.

2. Device according to Claim 1, characterized in that the first rotor (14) has a plurality of rows distributed on the circumference of radially aligned perforations (17) at an axial interval.

3. Device according to Claim 1, characterized in that the second rotor (24) has a plurality of rows distributed on its circumference of restraining means (25) aligned radially and at an axial interval.

4. Device according to Claim 3, characterized in that the restraining means are constructed as pins (25) projecting radially from the rotor (24).

5. Device according to Claim 1, characterized in that the thruster (23) exhibits strikers (23A) and is arranged in a central cavity of the first rotor (14) so that it is aligned with perforations (17) of the first rotor when the same are aligned with the restraining means (25).

6. Device according to either Claim 1 or 5, characterized in that the means to restrain the hollow components (10), the open end of which faces the axis of rotation of the first rotor (14), are constructed as spring elements, (23B, 32C) (sic) which retain the hollow components on their inside by frictional engagement.

7. Device according to either Claim 1 or 4, characterized in that a stripper device (27) which removes the hollow components (10) retained by the restraining means from the latter is associated with the restraining means (25) of the second rotor (24).

8. Device according to Claim 1, characterized in that a device (22) to eject hollow components (10) present in the perforations (17) of the first rotor, the open end of which faces the axis of rotation of the first rotor (14), is arranged in a central cavity of the first rotor (14), and that the ejector device (22) exhibits strikers (22A) which are aligned with perforations of the first rotor when the latter are aligned with the acceptor device (31).

9. Device according to Claim 1, characterized in that the radial perforations (17) have a stop (21) for the penetration depth of the hollow components.

10. Device according to Claim 9, characterized in that the stop (21) closes the associated perforation (17) at least partially.

11. Device according to Claim 1, characterized in that the acceptor device (31) exhibits a first guide path (31A) to accept hollow components (10) out of the first rotor (14) and a second guide path (31B) to accept hollow components from the second rotor (24), and that both guide paths (31A, 31B) lead into a common guide path (32).

12. Device according to Claim 1, characterized in that restraining means (28, 29) which restrain hollow components (10) in the perforations (17) of the first rotor (14) or hollow components (10) on the pins (25) of the second rotor are arranged at the common transfer point of the first rotor (14) and of the second rotor (24).

13. Device according to Claim 12, characterized in that the restraining means are constructed as restraining brushes (28, 29) and are arranged so that they operate by frictional engagement.

**Revendications**

1. Dispositif pour triage et alignement de corps creux alimentés d'une façon aléatoire, qui ont une extrémité fermée au moins partiellement et une extrémité opposée ouverte, dans une position de même sens, caractérisé par:

– un premier rotor (14) mobile autour d'un premier axe,

– un deuxième rotor (24) mobile autour d'un deuxième axe parallèle au premier axe,

– des ouvertures radiales passantes (17) dans le premier rotor (14) pour recevoir des corps creux (10) et des moyens de retenue (25) sur le deuxième rotor (24) pour la reprise des corps creux (10),

– une installation pour la rotation graduelle des deux rotors (14, 24), destinée à amener les ouvertures passantes (17) an alignement commun avec les moyens de retenue (25),

– une installation de convoyage (13) placée sur le premier rotor (14) pour l'acheminement des corps creux dans les ouvertures passantes (17) du premier rotor dans une position de celui-ci, dans laquelle ses ouvertures passantes sont en alignement avec l'installation de convoyage (13),

– un poussoir (23) pour faire glisser ces mêmes corps creux (10), qui occupent dans les ouvertures passantes (1è) une position, dans laquelle leur extrémité ouverte se présente à l'opposé de l'axe de rotation du premier rotor (14), vers les moyens de retenue (25) du deuxième rotor (24), et un dispositif (23B, 23C) pour retenir ces mêmes corps creux (10) dans les ouvertures passantes (17) dont l'extrémité ouverte se présente en face de l'axe de rotation,

– une installation de réception (31) fixée sur les deux rotors (14, 24) pour recevoir les corps creux (10) des deux rotors, après que ceux-ci ont amené les corps creux à l'installation de réception dans un même alignement, dans lequel les corps creux retenus par les rotors montrent chaque fois leur extrémité ouverte en face de l'axe correspondant des rotors, et

– des dispositifs (22, 27) pour faire glisser les corps creux dans une position, dans laquelle ils sont tous dans le même sens.

2. Dispositif selon la revendication 1, caractérisé en ce que, le premier rotor (14) a, distribuées sur le pourtour, plusieurs lignes d'ouvertures passantes (17), alignées radialement et s'éloignant par rapport à l'axe.

3. Dispositif selon la revendication 1, caractérisé en ce que, le deuxième rotor (24) a, réparties sur son pourtour, plusieurs lignes de moyens de retenue (25) alignés radialement et s'éloignant par rapport à l'axe.

4. Dispositif selon la revendication 3, caractérisé en ce que les moyens de retenue sont réalisés par des broches (25) faisant saillie radialement à partir du rotor (24).

5. Dispositif selon la revendication 1, caractérisé en ce que, le poussoir (23) présente des tiges-poussoirs (23A) et est installé dans un espace creux central du premier rotor (14), de manière, qu'il est aligné avec les ouvertures passantes (17) du premier rotor, quand celles-ci sont alignées avec les moyens de retenue (25).

6. Dispositif selon l'une quelconque des revendications 1 ou 5, caractérisé en ce que, les moyens pour retenir les corps creux (10), dont l'extrémité ouverte est dirigée vers l'axe de rotation du premier rotor (14), sont réalisés par des éléments de ressort (23B, 32C), qui maintiennent les corps creux par effet de friction sur la surface intérieure de ceux-ci.

7. Dispositif selon l'une quelconque des revendications 1 ou 4, caractérisé en ce que, pour les moyens de retenue (25) du deuxième rotor (24) une installation d'extraction (27) est appliquée, qui éloigne de ceux-ci les corps creux (10) maintenus par les moyens de retenue.

8. Dispositif selon la revendication 1, caractérisé en ce que, dans un espace vide central du premier rotor (14) un dispositif (22) est placé pour éjecter les corps creux (10) se trouvant dans les ouvertures passantes (17) du premier rotor, corps creux dont l'extrémité ouverte se présente en face de l'axe de rotation du premier rotor (14) et en ce que, le dispositif d'éjection (22) présente des tiges-poussoirs (22A), qui sont alignées avec les ouvertures passantes du premier rotor, quand celles-ci sont alignées avec l'installation de réception (31).

9. Dispositif selon la revendication 1, caractérisé en ce que, les ouvertures passantes (17) ont une butée (21) pour la profondeur de pénétration des corps creux.

10. Dispositif selon la revendication 9, caractérisé en ce que, la butée (21) ferme au moins partiellement l'ouverture passante correspondante.

11. Dispositif selon la revendication 1, caractérisé en ce que, 'installation de réception (31) présente une première glissière (31A) pour la réception des corps creux (10) du premier rotor (14) et une deuxième glissière (31A) pour la réception des corps creux du deuxième rotor (24) et en ce que, les deux glissières (31A, 31B) débouchent dans une glissière commune de guidage (32).

12. Dispositif selon la revendication 1, caractérisé en ce que, au point d'échange commun du premier rotor (14) et du deuxième rotor (24) sont placés des moyens de retenue (28, 29) qui retiennent les corps creux (10) dans les ouvertures passantes (17) du premier rotor (14) ou les corps creux (10) sur les broches (25) du deuxième rotor.

13. Dispositif selon la revendication 12, caractérisé en ce que les moyens de retenue sont réalisés par des brosses de retenue (28, 29) et sont placés de façon qu'ils agissent par effet de frottement.

FIG. 1

EP 0 255 599 B1

# FIG. 2a

FIG. 2

FIG. 3

FIG.4a

FIG.4

FIG.5